# EUROPEAN PATENT APPLICATION

(11) **EP 4 234 991 A1**
(43) Date of publication of application: **30.08.2023**
(21) Application number: 21909020.6
(22) Date of filing: 25.11.2021
(51) Int. Cl.: F16K 1/36, F16K 1/48, F25B 41/34

(54) **VALVE CORE ASSEMBLY AND ELECTRONIC EXPANSION VALVE HAVING SAME**

(30) Priority: 26.12.2020 CN 202023202711 U
(71) Applicant: Zhejiang Dunan Artificial Environment Co., Ltd., Shaoxing Zhejiang 311835 (CN)
(72) Inventor: HE, Yuchen, Shaoxing, Zhejiang 311835 (CN); ZHAN, Shaojun, Shaoxing, Zhejiang 311835 (CN); CHEN, Yonghao, Shaoxing, Zhejiang 311835 (CN)
(74) Representative: HGF
(86) International application number: PCT/CN2021/133192
(87) International publication number: WO 2022/135021

(57) **Abstract**

The invention provides a valve core assembly and an electronic expansion valve having the valve core assembly. The valve core assembly includes: a valve head, herein an inner wall surface of the valve head is provided with a flange portion which is inwardly protruded, and the flange portion is configured to divide an inner cavity of the valve head into an upper cavity body and a lower cavity body; a screw penetrating into the valve head; and an annular member sleeved at a lower end of the screw and located in the lower cavity body, herein an upper end face of the annular member is in contact with a lower end face of the flange portion. Herein the flange portion is provided with a balancing channel, and the balancing channel connects the upper cavity body and the lower cavity body. By applying technical schemes of the invention, since the balancing channel is arranged on the flange portion of the valve head, a pressure balance between the upper cavity body and the lower cavity body may be achieved, and there is no need to additionally provide other structures, thus a problem of difficulty in forming the balancing channel by drilling an inner hole on the screw is avoided, a machining difficulty of the balancing channel is further reduced, and a machining efficiency is increased, so a problem of difficulty in arranging the balancing channel in existing technologies may be solved.

## Description

### Cross-Reference to Related Application

The invention claims priority to Patent application No. 202023202711.7, filed to the China National Intellectual Property Administration on December 26, 2020 and entitled "Valve Core Assembly and Electronic Expansion Valve Having Valve Core Assembly", the invention of which is hereby incorporated by reference in its entirety.

### Technical Field

The invention relates to the technical field of valves, and specifically relates to a valve core assembly and an electronic expansion valve having the valve core assembly.

### Background

In related technologies, a pre-tightening spring arranged between a screw and a valve head has a certain pre-tightening force, and a rotor is rotated to drive the screw and the valve head to move together. While an expansion valve is closed, a valve sleeve is separated from a contact surface of the valve head.

In the above structure, in order to achieve an air pressure balance between an upper cavity body of the valve head and a lower cavity body of the valve head, it is usually necessary to arrange a balancing channel inside the valve core assembly. In the related technologies, the balancing channel is usually arranged on the screw, as to connect the upper cavity body and the lower cavity body. However, since the screw is a slender shaft, it is difficult to machine an inner hole on the screw, so a machining difficulty of the balancing channel is increased, and a machining efficiency is reduced.

### Summary

A main purpose of the invention is to provide a valve core assembly and an electronic expansion valve having the valve core assembly, as to solve a problem of difficulty in arranging a balancing channel in existing technologies.

In order to achieve the above purpose, according to one aspect of the invention, a valve core assembly is provided, including: a valve head, herein an inner wall surface of the valve head is provided with a flange portion which is inwardly protruded, and the flange portion is configured to divide an inner cavity of the valve head into an upper cavity body and a lower cavity body; a screw penetrating into the valve head; and an annular member sleeved at a lower end of the screw and located in the lower cavity body, herein an upper end face of the annular member is in contact with a lower end face of the flange portion; herein the flange portion is provided with a balancing channel, and the balancing channel connects the upper cavity body and the lower cavity body.

In an optional implementation mode, the balancing channel includes: a first groove arranged on an inner wall surface of the flange portion, herein the first groove is arranged along an axis direction of the flange portion and passes through the flange portion; and at least one protrusion arranged on the lower end face of the flange portion.

Further, the lower end face of the flange portion is provided with a plurality of protrusions, and the plurality of the protrusions is arranged at intervals in a circumferential direction of the flange portion.

Further, the balancing channel includes: a first groove arranged on an inner wall surface of the flange portion, herein the first groove is arranged along an axis direction of the flange portion and passes through the flange portion; and a second groove arranged on a lower end of the flange portion, herein the second groove is arranged along a radial direction of the flange portion, and the first groove and the second groove are connected.

Further, there is a plurality of the second grooves, and the plurality of the second grooves is arranged at interval in a circumferential direction of the flange portion.

Further, the screw includes a first rod section and a flanging structure arranged at an end of the first rod section, a radial size of the flanging structure is greater than a radial size of the first rod section, and the flanging structure is in limit fit with an end of the annular member.

Further, the first rod section has a process hole, and the process hole passes through the flanging structure.

Further, the screw further includes a second rod section, the second rod section is connected with an upper end of the first rod section, a diameter of the second rod section is greater than a diameter of the first rod section, and a step surface is formed between the first rod section and the second rod section. The valve core assembly further includes: an elastic member, herein the elastic member is sleeved on the first rod section and located above the flange portion; and a gasket sleeved on the first rod section and located above the elastic member, herein the gasket is abutted with the step surface.

Further, there is a gap between an outer wall surface of the annular member and the inner wall surface of the valve head.

According to another aspect of the invention, an electronic expansion valve is provided, including the above valve core assembly.

By applying technical schemes of the invention, since the balancing channel is arranged on the flange portion of the valve head, a pressure balance between the upper cavity body and the lower cavity body is achieved, and there is no need to additionally provide other structures, thus a problem of difficulty in forming the balancing channel by drilling an inner hole on the screw is avoided, a machining difficulty of the balancing channel is further reduced, and a machining efficiency is increased.

### Brief Description of the Drawings

Drawings of the description for constituting a part of the invention are used to provide further understanding of the invention. Exemplary embodiments of the invention and descriptions thereof are used to explain the invention, and do not constitute improper limitation to the invention. In the drawings:
Fig. 1 shows a structure schematic diagram of Embodiment I of an electronic expansion valve according to the invention;
Fig. 2 shows a cross-sectional view of a valve head of Fig. 1;
Fig. 3 shows a structure schematic diagram of Embodiment II of the electronic expansion valve according to the invention;
Fig. 4 shows a schematic diagram of a partially enlarged structure of Fig. 3; and
Fig. 5 shows a cross-sectional view of the valve head of Fig. 3.

Herein, the above drawings include the following figure marks:
10. Valve head; 11. Flange portion; 111. First groove; 112. Protrusion; 113. Second groove; 12. Sealing ring; 20. Screw; 21. First rod section; 22. Flanging structure; 23. Second rod section; 24. Process hole; 30. Annular member; 40. Elastic member; and 50. Gasket.

### Detailed Description of the Embodiments

It should be noted that in the case without conflicting, embodiments in the invention and features in the embodiments may be combined with each other. The invention is described in detail below with reference to the drawings and in combination with the embodiments.

### Embodiment I:

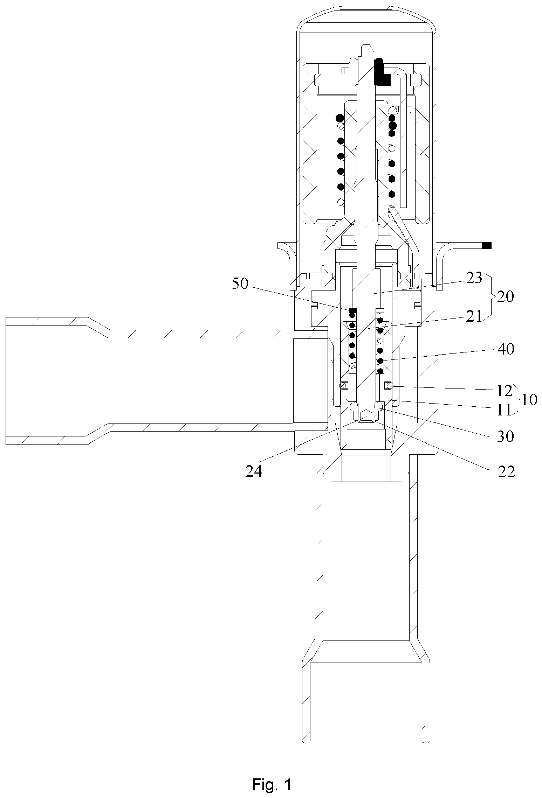

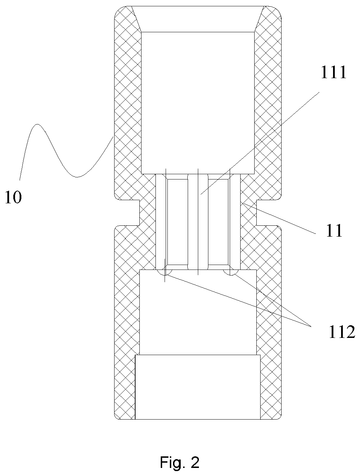

As shown in Figs. 1 and 2, this embodiment provides a valve core assembly, including a valve head 10, a screw 20 and an annular member 30, herein an inner wall surface of the valve head 10 is provided with a flange portion 11 which is inwardly protruded, and the flange portion 11 is configured to divide an inner cavity of the valve head 10 into an upper cavity body and a lower cavity body; the screw 20 penetrates into the valve head 10; and the annular member 30 is sleeved at a lower end of the screw 20 and located in the lower cavity body, and an upper end face of the annular member 30 is in contact with a lower end face of the flange portion 11. Herein the flange portion 11 is provided with a balancing channel, and the balancing channel connects the upper cavity body and the lower cavity body.

In this embodiment, since the balancing channel is arranged on the flange portion 11 of the valve head 10, a pressure balance between the upper cavity body and the lower cavity body may be achieved, and there is no need to additionally provide other structures, thus a problem of difficulty in forming the balancing channel by drilling an inner hole on the screw is avoided, a machining difficulty of the balancing channel is further reduced, and a machining efficiency is increased.

Further, the above setting makes a structure of the entire valve core assembly compact.

As shown in Figs. 1 and 2, in this embodiment, the balancing channel includes a first groove 111 and a protraction 112. Herein, the first groove 111 is arranged on an inner wall surface of the flange portion 11, and the first groove 111 is arranged along an axis direction of the flange portion 11 and passes through the flange portion 11; at least one the protrusion 112 is arranged on the lower end face of the flange portion 11.

In some embodiments, the first groove 111 is arranged along the axis direction of the flange portion 11 and passes through the axis direction of the entire flange portion 11. In order to prevent a situation that the first groove 111 may not connect the upper cavity body and the lower cavity body because the upper end face of the annular member 30 is in contact with the lower end face of the flange portion 11, the protrusion 112 is arranged on the lower end face of the flange portion 11, so that there is a gap between the lower end face of the flange portion 11 and a contact surface of the annular member 30, and a communication between the upper cavity body and the lower cavity body is achieved.

In some embodiments, the lower end face of the flange portion 11 is provided with a plurality of protrusions 112, and the plurality of the protrusions 112 is arranged at intervals in a circumferential direction of the flange portion 11.

The above setting makes a gap between the lower end face of the flange portion 11 and the upper end face of the annular member 30 uniform and consistent, and a structural consistency of the entire valve core assembly is guaranteed.

As shown in Figs. 1 and 2, in this embodiment, the screw 20 includes a first rod section 21 and a flanging structure 22 arranged at an end of the first rod section 21, a radial size of the flanging structure 22 is greater than a radial size of the first rod section 21, and the flanging structure 22 is in limit fit with an end of the annular member 30.

The above setting effectively limits the position relationship between the annular member 30 and the first rod section 21, and prevents the annular member 30 from being detached from the first rod section 21.

As shown in Figs. 1 and 2, in this embodiment, the first rod section 21 has a process hole 24, and the process hole 24 passes through the flanging structure 22.

By arranging the process hole 24, the forming of the flanging structure 22 is facilitated, and a machining difficulty of the flanging structure 22 is reduced. The process hole 24 is used to avoid a tool for stamping forming.

As shown in Fig. 1, in this embodiment, the screw 20 further includes a second rod section 23, the second rod section 23 is connected with an upper end of the first rod section 21, a diameter of the second rod section 23 is greater than a diameter of the first rod section 21, and a step surface is formed between the first rod section 21 and the second rod section 23. The valve core assembly further includes an elastic member 40 and a gasket 50, the elastic member 40 is sleeved on the first rod section 21 and located above the flange portion 11; and the gasket 50 is sleeved on the first rod section 21 and located above the elastic member 40, and the gasket 50 is abutted with the step surface.

By the above setting, the gasket 50 effectively reduces a friction between the elastic member 40 and the step surface, and prevent the wear of the screw 20, thereby a service life of the screw 20 is improved.

Preferably, there is a gap between an outer wall surface of the annular member 30 and the inner wall surface of the valve head 10.

The above setting avoids a friction produced between the annular member 30 and the valve head 10, and improves a service life of the annular member 30 and a service life of the valve head 10.

As shown in Fig. 1, this embodiment further provides an electronic expansion valve, including the above valve core assembly.

In this embodiment, since the balancing channel is arranged on the flange portion 11 of the valve head 10, the pressure balance between the upper cavity body and the lower cavity body may be achieved, and there is no need to additionally provide other structures, thus a problem of difficulty in forming the balancing channel by drilling an inner hole on the screw is avoided, the machining difficulty of the balancing channel is further reduced, and the machining efficiency is increased.

### Embodiment II

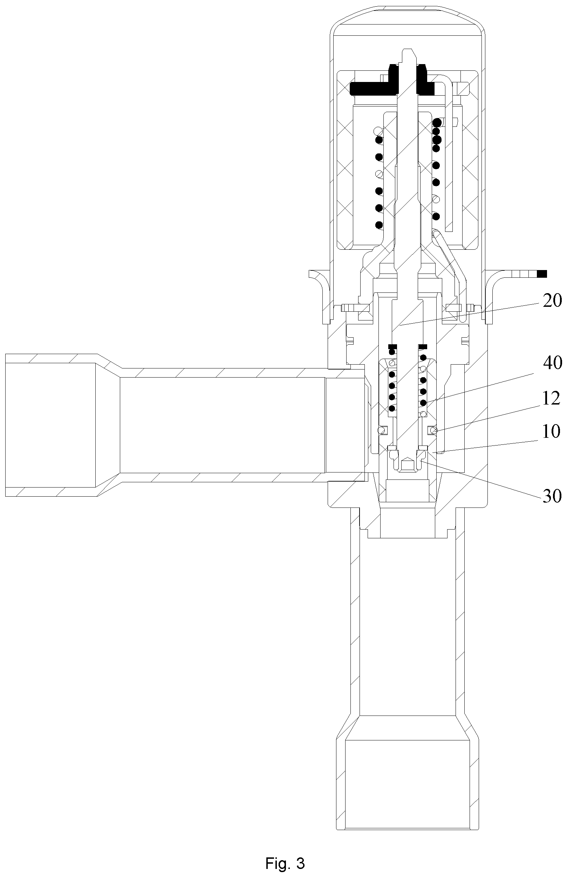

The difference between EmbodimentII and Embodiment I is that:
As shown in Figs. 3 to 5, in this embodiment, the balancing channel includes a first groove 111 and a second groove 113. Herein, the first groove 111 is arranged on the inner wall surface of the flange portion 11, and the first groove 111 is arranged along an axis direction of the flange portion 11 and passes through the flange portion; and the second groove 113 is arranged on the lower end of the flange portion 11, the second groove 113 is arranged along a radial direction of the flange portion 11, and the first groove 111 and the second groove 113 are connected.

Specifically, in this embodiment, the first groove 111 is arranged along the axis direction of the flange portion11 and passes through the axis direction of the entire flange portion 11. In order to prevent a situation that the first groove 111 can not connect the upper cavity body and the lower cavity body because the upper end face of the annular member 30 is adhered to the lower end face of the flange portion 11, the second groove 113 is arranged on the lower end face of the flange portion 11, so that there is a gap between the lower end face of the flange portion 11 and a contact surface of the annular member 30, and a communication between the upper cavity body and the lower cavity body is achieved.

In some embodiments, the second groove 113 is arranged by passing through the flange portion 11 along the radial direction.

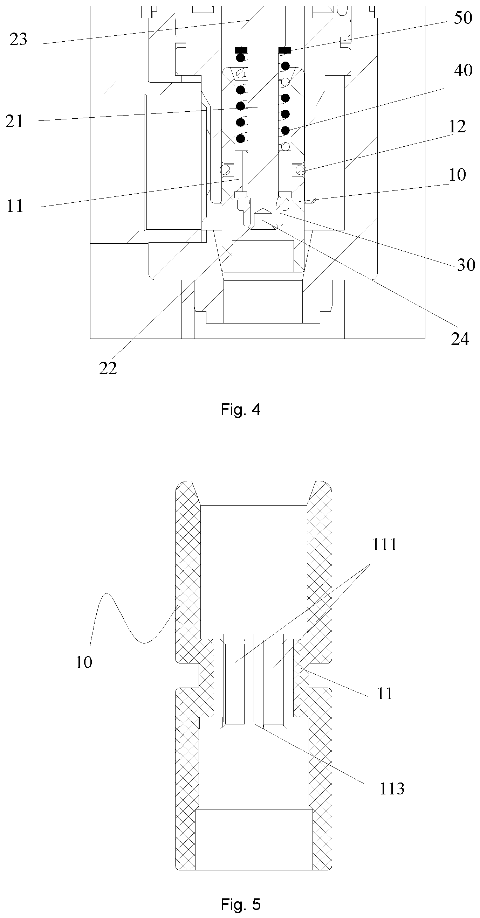

Further, as shown in Fig. 5, in this embodiment, there is a plurality of the second grooves 113, and the plurality of the second grooves 113 is arranged at intervals in the circumferential direction of the flange portion 11.

The above setting makes the gap between the lower end face of the flange portion 11 and the upper end face of the annular member 30 uniform and consistent, and a structural consistency of the entire valve core assembly is guaranteed.

The other structures of Embodiment II are the same as those of Embodiment I , and it is not repeatedly described here.

From the above descriptions, it may be seen that the above embodiments of the invention achieve the following technical effects:
Since the balancing channel is arranged in the flange portion of the valve head, the pressure balance between the upper cavity body and the lower cavity body is achieved, and there is no need to additionally provide other structures, thus the problem of difficulty in forming the balancing channel by drilling the inner hole on the screw is avoided, the machining difficulty of the balancing channel is further reduced, and the machining efficiency is increased.

For ease of descriptions, spatial relative terms such as "above", "on", "on the upper surface", and "upper" may be used here to describe the spatial position relationship between a device or feature and other devices or features as shown in figures. It should be understood that the spatial relative terms are intended to encompass different orientations in use or operation other than those described in the figure for the device. For example, if the device in the drawings is inverted, the device described as "above other devices or structures" or "on other devices or structures" may be positioned as "below other devices or structures" or "under other devices or structures" later. Therefore, the exemplary term 'above' may include two orientations: 'above' and 'below'. The device may also be positioned in different modes (rotated by 90 degrees or in other orientations), and the spatial relative description used here is explained accordingly.

In addition, it should be noted that the use of words such as "first" and "second" to define components is only for the purpose of distinguishing the corresponding components. If it is not otherwise stated, the above words do not have special meaning and may not be understood as limiting a scope of protection of the invention.

The above are only preferred embodiments of the invention, and are not intended to limit the invention. For those skilled in the art, the invention may have various modifications and variations. Any modifications, equivalent replacements, improvements and the like made within the spirit and principles of the invention shall be included within the scope of protection of the invention.

## Claims

1. A valve core assembly, comprising:
a valve head (10), wherein an inner wall surface of the valve head (10) is provided with a flange portion (11) which is inwardly protruded, and the flange portion (11) is configured to divide an inner cavity of the valve head (10) into an upper cavity body and a lower cavity body;
a screw (20) penetrating into the valve head (10); and
an annular member (30) sleeved at a lower end of the screw (20) and located in the lower cavity body, wherein an upper end face of the annular member (30) is in contact with a lower end face of the flange portion (11);
wherein the flange portion (11) is provided with a balancing channel, and the balancing channel connects the upper cavity body and the lower cavity body.

2. The valve core assembly according to claim 1, wherein the balancing channel comprises:
a first groove (111) arranged on an inner wall surface of the flange portion (11), wherein the first groove (111) is arranged along an axis direction of the flange portion (11) and passes through the flange portion; and
at least one protrusion (112) arranged on the lower end face of the flange portion (11).

3. The valve core assembly according to claim 2, wherein the lower end face of the flange portion (11) is provided with a plurality of protrusions (112), and the plurality of the protrusions (112) is arranged at intervals in a circumferential direction of the flange portion (11).

4. The valve core assembly according to claim 1, wherein the balancing channel comprises:
a first groove (111) arranged on an inner wall surface of the flange portion (11), wherein the first groove (111) is arranged along an axis direction of the flange portion (11) and passes through the flange portion; and
a second groove (113) arranged on a lower end of the flange portion (11), wherein the second groove (113) is arranged along a radial direction of the flange portion (11), and the first groove (111) and the second groove (113) are connected.

5. The valve core assembly according to claim 4, wherein there is a plurality of the second grooves (113), and the plurality of the second grooves (113) is arranged at intervals in a circumferential direction of the flange portion (11).

6. The valve core assembly according to any one of claims 1 to 5, wherein the screw (20) comprises a first rod section (21) and a flanging structure (22) arranged at an end of the first rod section (21), a radial size of the flanging structure (22) is greater than a radial size of the first rod section (21), and the flanging structure (22) is in limit fit with an end of the annular member (30).

7. The valve core assembly according to claim 6, wherein the first rod section (21) has a process hole (24), and the process hole (24) passes through the flanging structure (22).

8. The valve core assembly according to claim 6, wherein the screw (20) further comprises a second rod section (23), the second rod section (23) is connected with an upper end of the first rod section (21), a diameter of the second rod section (23) is greater than a diameter of the first rod section (21), and a step surface is formed between the first rod section (21) and the second rod section (23); and the valve core assembly further comprises:
an elastic member (40), wherein the elastic member (40) is sleeved on the first rod section (21) and located above the flange portion (11); and
a gasket (50) sleeved on the first rod section (21) and located above the elastic member (40), wherein the gasket (50) is abutted with the step surface.

9. The valve core assembly according to claim 1, wherein there is a gap between an outer wall surface of the annular member (30) and the inner wall surface of the valve head (10).

10. An electronic expansion valve, comprising the valve core assembly according to any one of claims 1 to 9.
